# EUROPÄISCHE PATENTSCHRIFT

(11) **EP 2 018 475 B1**
(45) Veröffentlichungstag und Bekanntmachung des Hinweises auf die Patenterteilung: **16.12.2009**
(21) Anmeldenummer: 07728985.8
(22) Anmeldetag: 10.05.2007
(51) Int. Cl.: F03D 1/06

(54) **ROTORBLATT FÜR EINE WINDENERGIEANLAGE**
ROTOR BLADE FOR A WIND ENERGY INSTALLATION
PALE DE ROTOR POUR UNE ÉOLIENNE

(30) Priorität: 11.05.2006 DE 102006022279
(43) Veröffentlichungstag der Anmeldung: 28.01.2009
(73) Patentinhaber: Wobben, Aloys, 26607 Aurich (DE)
(72) Erfinder: ROHDEN, Rolf, 26607 Aurich (DE)
(74) Vertreter: Gültzow, Marc
(86) Internationale Anmeldenummer: PCT/EP2007/054533
(87) Internationale Veröffentlichungsnummer: WO 2007/131937

(56) Entgegenhaltungen:
- EP-A- 0 258 926
- EP-A- 1 184 566
- WO-A-03/078833
- US-A- 2 647 586

## Beschreibung

Die vorliegende Erfindung betrifft ein Rotorblatt für eine Windenergieanlage, wobei das Rotorblatt mindestens eine erste und eine zweite Komponente aufweist, wobei die erste Komponente die Rotorblattspitze und die zweite Komponente die Rotorblattwurzel aufweist.

Ein geteiltes Rotorblatt ist z. B. aus der DE 199 62 989 A1 bekannt. Die Teile dieses bekannten Rotorblattes werden wegen der beträchtlichen Abmessungen getrennt hergestellt und transportiert, um so Anforderungen an die Infrastruktur sowohl bei der Herstellung als auch beim Transport zu begrenzen.

Als allgemeiner weiterer Stand der Technik sei auf die Dokumente DE 101 52 449 A1, DE 203 20 714 U1 und WO 03/078833 A1 verwiesen.

Aufgabe der vorliegenden Erfindung ist es, ein Rotorblatt für eine Windenergieanlage weiter zu optimieren.

Diese Aufgabe wird bei einem Rotorblatt nach Anspruch 1 gelöst durch die Verwendung eines ersten Materials für die erste Komponente und eines zweiten Materials für die zweite Komponente.

Somit wird ein Rotorblatt für eine Windenergieanlage vorgesehen, welches mindestens eine erste und eine zweite Komponente aufweist. Die erste Komponente weist die Rotorblattspitze und die zweite Komponente weist die Rotorblattwurzel auf. Die erste und die zweite Komponente sind als separate Teile ausgestaltet, um gemeinsam das Rotorblatt auszubilden. Die erste Komponente weist ein erstes Material und die zweite Komponente weist ein zweites Material auf.

Dabei liegt der Erfindung die Erkenntnis zugrunde, dass durch eine Teilung des Rotorblattes zwar die Dimensionen der zu handhabenden Teile verringert werden, eine Auswahl geeigneter Materialien und damit verbundener Produktionsverfahren die Wirtschaftlichkeit aber ebenfalls günstig beeinflussen und dass dieses auf mehrere Faktoren zurückzuführen ist. Durch eine Verringerung der Dimensionen der Einzelteile verringern sich auch die Anforderungen an Infrastruktur und Logistik bei Herstellung, Handhabung und Transport der Rotorblätter, bis hin zur Montage an der Windenergieanlage. Die Infrastruktur ist jedoch auch von dem zu verarbeitenden Material abhängig, denn je nach Material sind vor und nach der reinen Formgebung Vor- und Nachbearbeitungsschritte erforderlich. Dies sind z. B. Zuschneiden und Entgraten bei der Metallverarbeitung. Bei der Verarbeitung faserverstärkter Kunststoffe gehört dazu die Einhaltung vorgegebener thermischer Anforderungen, z. B. bei Tempervorgängen, etc.

Während der Stand der Technik zwar bereits mehrteilige Rotorblätter beschreibt, deren formgebende Teile über die gesamte Rotorblattlänge stets aus dem selben Material hergestellt sind, schlägt die Erfindung die Verwendung unterschiedlicher Materialien vor, die sich vorteilhaft auf die Hauptfunktion der Komponente abstimmten lassen. Diese gezielte Materialauswahl führt z. B. zu einem Material mit einem vergleichsweise hohen E-Modul für einen Bereich, der mit hohen Lasten beaufschlagt wird, und zu einem Material mit geringem Eigengewicht für Rotorblattteile, wo diese Lasten nicht auftreten.

Nach dem Stand der Technik würden sonst leichtes Material mit vergleichsweise niedrigem E-Modul z. B. auch dort eingesetzt, wo ein hoher Lastabtrag sichergestellt sein muss. Entsprechend viel Material muss dort eingebaut werden; erheblich mehr als allein zur Erhaltung der Formtreue erforderlich ist, um einen sicheren Lastabtrag zu gewährleisten. Diese beträchtliche Materialmenge kann durch eine erfindungsgemäße Auswahl eines anderen Materials mit einem höheren E-Modul eingespart werden.

In einer bevorzugten Ausführungsform des Rotorblattes ist die zweite Komponente wiederum in wenigstens zwei Teile geteilt, welche gemeinsam die zweite Komponente bilden. Die Aufteilung erfolgt besonders bevorzugt in einen tragenden Teil und einen Blatthinterkasten. Durch diese Aufteilung kann die Handhabung großer Rotorblattkomponenten weiter erleichtert werden und insbesondere der Straßentransport wird auf diese Weise um einiges vereinfacht, denn Rotorblätter haben die größte Tiefe im Bereich der zweiten Komponente und können dort leicht Abmessungen von mehr als 6 m erreichen. Damit stellt jede enge Fahrbahnkurve und jede Brücke ein potentielles Hindernis mit entsprechenden Problemen dar, die durch eine Zweiteilung dieser zweiten Komponente verringert, wenn nicht sogar vermieden werden können.

Dabei werden besonders bevorzugt für die zwei Teile, welche gemeinsam die zweite Komponente bilden, wiederum unterschiedliche Materialien verwendet.

Um die Lösung von Transportaufgaben noch weiter zu erleichtern ist der Blatthinterkasten bei Bedarf nochmals in mehrere Teile aufgeteilt, sodass auf diese Weise Rotorblätter mit beliebigen Dimensionen hergestellt und transportiert werden können.

Um zu einer besonders vorteilhaften Aufteilung des Rotorblattes in die beiden Komponenten zu gelangen, weist die erste Komponente bevorzugt eine Länge von etwa 5/6 bis 1/2 der Länge des gesamten Rotorblattes auf, während die Länge der zweiten Komponente vorzugsweise 1/6 bis 1/2 der Rotorblattlänge entspricht.

Der Blatthinterkasten bzw. dessen Teile können z. B. aus Aluminium gefertigt werden. Dieses Material ist leicht, gut formbar und hat ein Temperaturverhalten, dass demjenigen von Stahl nahe kommt. Daher ist bei einer Kombination eines Aluminium-Hinterkastens und einem tragenden Teil aus Stahl ein relativ preisgünstig herstellbares Blatt mit einer ausreichenden Formtreue zu erwarten. Darüber hinaus ist auch das E-Modul von Aluminium etwa um den Faktor 5 kleiner als dasjenige von Stahl. Daraus ergibt sich u. a., dass Lasten, mit welchen die zweite Komponente beaufschlagt wird, nicht vom weicheren Material des Hinterkastens aufgenommen werden. Entsprechend günstiger kann wiederum die Dimensionierung der Teile des Hinterkastens erfolgen.

Um die Montage des Blattes durch das Zusammenfügen der Einzelteile und auch im späteren Betrieb eine Überprüfung des Blattes und insbesondere eine Kontrolle des Übergangs zwischen der ersten und der zweiten Komponente zu erleichtern, ist besonders bevorzugt der tragende Teil der zweiten Komponente begehbar ausgebildet. Das bedeutet einerseits, dass der Innenraum ausreichend Platz bietet und weiterhin das Material so tragfähig ist, dass zumindest keine (dauerhaften) Verformungen entstehen.

Die Verbindung der ersten und zweiten Komponente des Rotorblattes erfolgt besonders bevorzugt mit einem stumpfen Stoß, wobei die Verbindungselemente zur Überbrückung der Stoßfuge ausschließlich innerhalb des Rotorblattes angeordnet sind. Dadurch wird eine aerodynamisch saubere Außenkontur des Blattes erreicht.

Dabei ist die Verbindung vorzugsweise so ausgebildet, dass die Verbindungselemente Querbolzen, Zugelemente und an der zweiten Komponente einen rotorblatteinwärts gerichteten L-Flansch umfassen, wobei die Querbolzen in Ausnehmungen in der ersten Komponente aufgenommen sind. Diese Ausnehmungen sind in einer bevorzugten Ausführungsform als Durchgangslöcher ausgebildet. Um eine aerodynamisch einwandfreie Rotorblattoberfläche zu erhalten, werden die Löcher in geeigneter Weise abgedeckt. Dies kann mittels vorgefertigter Abdeckungen geschehen, mit denen das Loch von außen abgedeckt wird. Natürlich kann diese Aufgabe auch bei der Blattoberflächenbearbeitung durch Auftragen einer Füllmasse o. ä. gelöst werden.

In einer alternativen Ausführungsform der vorliegenden Erfindung sind die Ausnehmungen als Sacklöcher von der Innenseite der ersten Komponente her ausgebildet, wobei die Zugelemente unabhängig von der Art der Ausführung der Ausnehmungen mit den Querbolzen verbunden sind, sich bis durch den L-Flansch erstrecken und dort befestigt sind.

Entscheidend für die Ausführungsform der Ausnehmungen ist die Materialstärke der ersten Komponente im Bereich der Ausnehmung. Um einen zuverlässigen Lastabtrag zu erreichen ist für die Querbolzen eine vorgegebene Mindestauflagefläche erforderlich, aus welcher sich die notwendige Tiefe, der Ausnehmung ergibt. Ist das Material nicht dicker, ergibt sich ein Durchgangsloch, welches dann an der Rotorblattoberfläche abgedeckt werden muss. Ist das Material dicker, ist ein Sackloch ausreichend, sodass eine Nachbearbeitung der Rotorblattoberfläche nicht erforderlich ist.

Zur Ausnutzung dieses wirtschaftlich vorteilhaften Blattes ist eine Windenergieanlage mit wenigstens einem derartigen Rotorblatt vorgesehen.

Nachfolgend wird ein bevorzugtes Ausführungsbeispiel der vorliegenden Erfindung anhand der beigefügten Figuren näher erläutert. Dabei zeigen:
- Fig. 1: eine Explosionsdarstellung eines erfindungsgemäßen Rotorblattes;
- Fig. 2: eine Darstellung eines erfindungsgemäßen Rotorblattes im zusammengefügten Zustand;
- Fig. 3: eine vereinfachte Darstellung der Verbindung zwischen der ersten und der zweiten Komponente in einer Seitenansicht;
- Fig. 4: die Verbindung zwischen der ersten und zweiten Komponente in einer Draufsicht; und
- Fig. 5: eine alternative Ausführungsform der in Figur 3 dargestellten Verbindung.

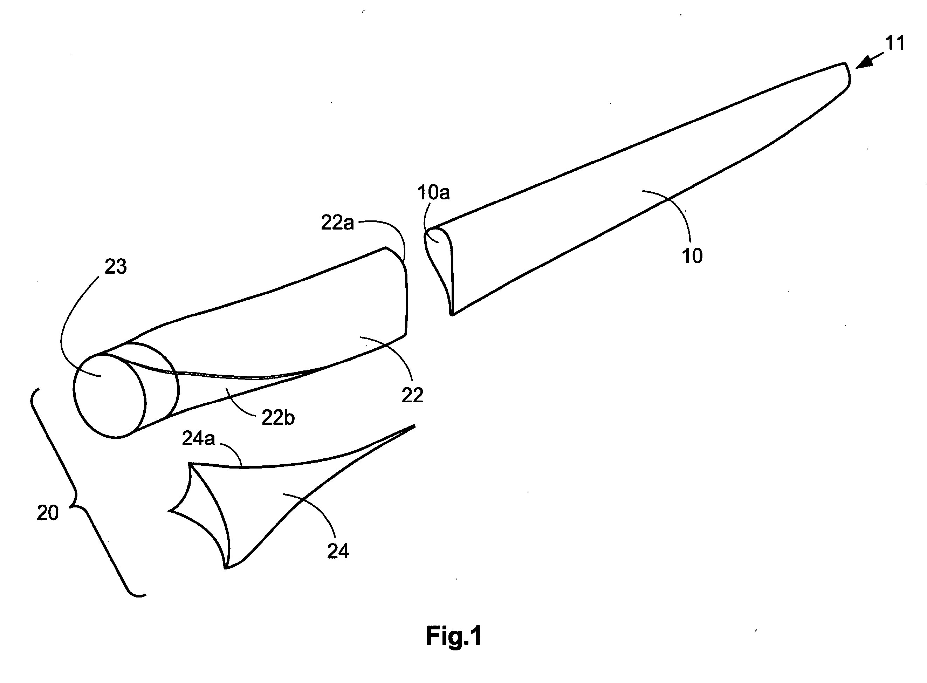

Die Explosionsdarstellung in Figur 1 zeigt die erste Komponente 10, welche die Rotorblattspitze 11 umfasst. Die zweite Komponente 20 wird aus zwei Teilen, nämlich einem tragenden Teil 22, welcher auch die Rotorblattwurzel 23 zur Befestigung des Rotorblattes an der nicht dargestellten Rotornabe umfasst, sowie einem Blatthinterkasten 24 gebildet. Das tragende Teil 22 weist eine erste Verbindungsfläche 22a und eine zweite Verbindungsfläche 22b auf. Die erste Verbindungsfläche 22a dient dazu, das tragende Teil 22 mit der ersten Komponente bzw. der Verbindungsfläche 10a der ersten Komponente zu verbinden. Die zweite Verbindungs- bzw. Kontaktfläche 22b dient dazu, das tragende Teil 22 mit dem Blatthinterkasten 24 zu verbinden. Hierbei sind die entsprechenden Kontaktflächen, d. h. zum einen die Kontakt- bzw. Verbindungsfläche 22a und zum anderen die Kontakt- bzw. Verbindungsfläche 10a, derart aneinander angepasst, dass das tragende Teil und die erste Komponente im Wesentlichen nahtlos aneinander befestigt werden können. Entsprechendes gilt für die Verbindungs- bzw. Kontaktflächen 22b und 24a.

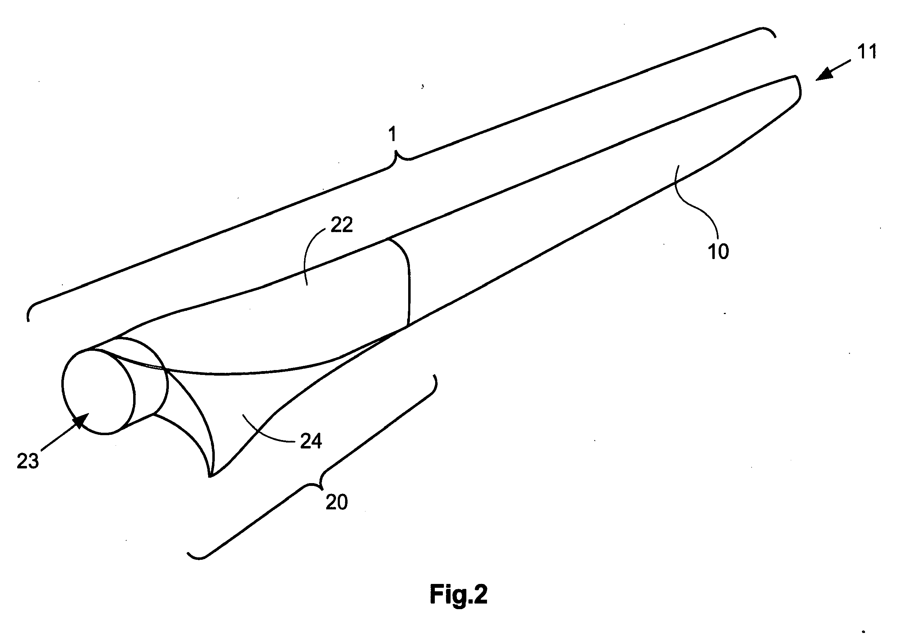

Figur 2 zeigt das erfindungsgemäße Rotorblatt 1 zusammengesetzt. Dabei bilden die erste Komponente 10 und die aus den Teilen 22 und 24 zusammengesetzte zweite Komponente 20 das Rotorblatt, das in seiner Gesamtheit mit dem Bezugszeichen 1 bezeichnet ist.

Durch die Wahl verschiedener Materialien wird den unterschiedlichen Anforderungen an die Komponenten bzw. deren Teile Rechnung getragen. So wird für die erste Komponente (Blattspitze) bevorzugt faserverstärktes Kunstharz verwendet, während für den tragenden Teil der zweiten Komponente (Blattwurzel) Stahl benutzt wird und Aluminium für den oder die Teile des Blatthinterkastens Anwendung findet. So kann dem tragenden Teil die erforderliche Festigkeit durch seit langem bekannte und sicher beherrschte Arbeitsverfahren bei der Stahlverarbeitung gegeben werden. Da es sich bei der zweiten Komponente um diejenige handelt, welche die Rotorblattwurzel umfasst, die also bei dem zusammengefügten Rotorblatt den inneren, nabennahen Bereich bildet, werden an die Formtreue keine besonders hohen Anforderungen gestellt. Durch das relativ hohe E-Modul von Stahl ist auch kein zusätzliches Material erforderlich, um die auftretenden Lasten aus dem Rotorblatt abzuleiten. Anders verhielte sich das z. B. bei glasfaserverstärktem Kunststoff (GFK) als Material für die zweite Komponente. Hier müsste mehr Material verwendet werden, als für eine formstabile Ausführung eigentlich erforderlich ist, um die zum Lastabtrag erforderliche Biegesteifigkeit zu erreichen. Da Stahl aber ein etwa 5-fach höheres E-Modul als GFK hat, ist diese Verstärkung und der damit unvermeidlich einhergehende Aufwand nicht erforderlich.

Die erste Komponente (Blattspitze), die den äußeren Teil des Rotorblattes bildet, muss hingegen mit hoher Formtreue hergestellt werden, da diese Komponente ganz überwiegend die aerodynamischen Eigenschaften des Rotorblattes bestimmt. Hierzu sind seit vielen Jahren Herstellungsverfahren unter Verwendung faserverstärkter Kunstharze bekannt, sodass sich auch in Serienfertigung Komponenten mit einer hohen Formtreue und gleichzeitig geringem Gewicht, dafür aber mit höheren Materialkosten als für Stahl, herstellen lassen. Natürlich kann auch ein anderes Material mit vergleichsweise geringem Gewicht, wie Aluminium, für die erste Komponente verwendet werden. Das geringe Gewicht der ersten Komponente führt zu entsprechend geringen Lasten, die auf die zweite Komponente und die Windenergieanlage insgesamt einwirken. Beispielhaft seien hier die umlaufzyklischen Lasten durch die Gravitationswirkung genannt.

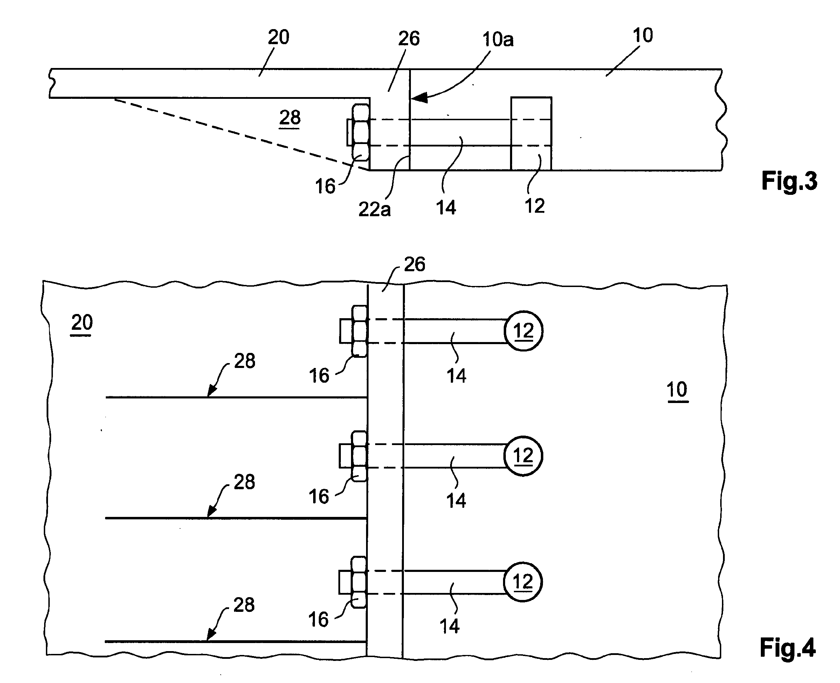

In Figur 3 ist zu erkennen, wie eine Verbindung zwischen der ersten Komponente 10 und der zweiten Komponente 20 bzw. der Kontaktfläche 10a und der Kontaktfläche 22b erfolgen kann.

In der ersten Komponente 10 sind sogenannte Sacklöcher ausgebildet, also Ausnehmungen, die das Material nicht vollständig durchdringen. In eine solche Ausnehmung wird ein Querbolzen 12 eingesetzt. Mit diesem Querbolzen 12 wird ein Zugelement 14, z. B. eine Gewindestange, verbunden, deren Länge so bemessen ist, dass sie aus der ersten Komponente 10 soweit herausragt, dass die zweite Komponente 20 darauf aufgesetzt werden kann und eine Verschraubung möglich ist.

Da die zweite Komponente 20 einen L-Flansch 26 aufweist, der rotorblatteinwärts gerichtet ist, lässt sich dieser Figur 3 entnehmen, dass auch der Querbolzen 12 vom Rotorblattinneren aus in die Ausnehmung eingesetzt wird. Dadurch bleibt die Rotorblattaußenseite unversehrt und somit aerodynamisch sauber.

Wie dieser Figur weiterhin zu entnehmen ist, werden die beiden Komponenten 10, 20 des Rotorblattes miteinander verbunden, indem eine Mutter 16 auf das aus dem L-Flansch 26 der zweiten Komponente 20 herausragende Gewinde des Zugelementes 14 aufgesetzt wird.

Um einen günstigeren Lastabtrag aus dem L-Flansch 26 in die zweite Komponente 20 zu erreichen, können in vorgegebenen Abständen Kniebleche 28 vorgesehen sein.

Figur 4 zeigt die Verbindung zwischen der ersten Komponente 10 und der zweiten Komponente 20 in einer Draufsicht. Hier sind wiederum die Querbolzen 12 dargestellt, mit denen Zugelemente 14 verbunden sind, welche durch den L-Flansch 26 der zweiten Komponente 20 hindurchgreifen und mit Muttern 16 festgezogen sind, sodass sich eine feste Verbindung zwischen den beiden Komponenten 10, 20 ergibt.

Dieser Figur lässt sich weiterhin entnehmen, dass zwischen zwei benachbarten Zugelementen jeweils ein Knieblech 28 vorgesehen ist, sodass diese Kniebleche 28 über den gesamten Innenumfang des Rotorblattes verteilt sind und damit einen gleichmäßigen Lastabtrag unterstützen.

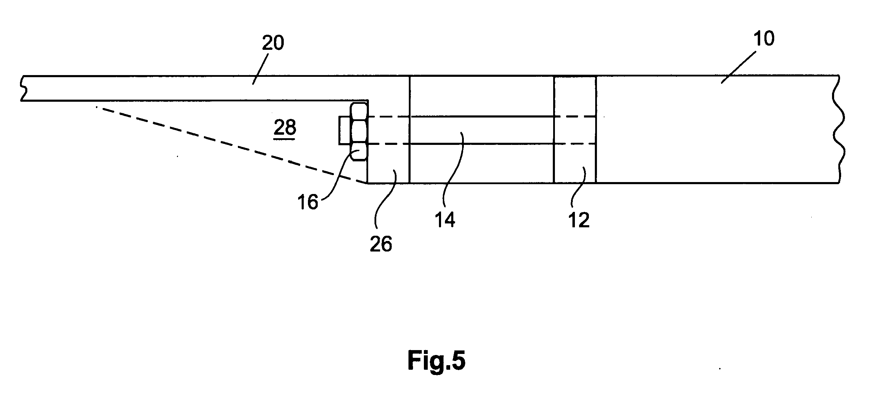

Figur 5 zeigt eine alternative Ausführungsform der in Figur 3 dargestellten Verbindung. Der Unterschied zwischen den beiden Figuren besteht im Wesentlichen darin, dass in Figur 5 Durchgangslöcher an der Stelle der in Figur 3 gezeigten Sacklöcher dargestellt sind. Die übrigen Teile sind gleich und haben die gleichen Bezugszeichen, wie in Figur 3. Daher wird hier auf eine Wiederholung der Beschreibung verzichtet und insofern auf die Beschreibung zu Figur 3 verwiesen.

Die oben beschriebenen Rotorblätter werden vorzugsweise als Rotorblätter einer Windenergieanlage verwendet, wobei die Windenergieanlage vorzugsweise drei dieser Rotorblätter aufweist.

Gemäß einem weiteren Ausführungsbeispiel der Erfindung können der Blatthinterkasten 24 sowie die Rotorblattspitze unterschiedliche Dimensionen aufweisen. Hierbei sollte jedoch darauf geachtet werden, dass die Verbindungsflächen 10a der Rotorblattspitze 24a und des Blatthinterkastens 24 auch bei unterschiedlichen Dimensionen der Rotorblattspitze und des Hinterkastens gleich bleiben, damit die jeweiligen bzw. die unterschiedlichen Rotorblattspitzen und Blatthinterkästen an dem tragenden Teil 22 befestigt werden können. Somit kann gewährleistet werden, dass basierend auf dem tragenden Teil 22 und mit unterschiedlich ausgestalteten Rotorblattspitzen und Rotorblatthinterkästen 24 ein Rotorblatt für eine Windenergieanlage modular aufgebaut werden kann. Das jeweilige Rotorblatt kann somit auf einfache Art und Weise an die zu erwartenden Betriebsbedingungen angepasst werden. Somit können Rotorblätter mit unterschiedlicher Länge, Breite und mit unterschiedlichen geometrischen Ausmaßen hergestellt werden, wobei das tragende Teil 22 unverändert bleibt und lediglich die Rotorblattspitze und der Blatthinterkasten entsprechend angepasst werden müssen.

Somit kann eine kostengünstige Produktion des tragenden Teils erreicht werden, da dieses Teil für eine Vielzahl von unterschiedlichen Rotorblättern identisch ausgestaltet ist.

## Patentansprüche

1. Rotorblatt für eine Windenergieanlage, mit
mindestens einer ersten und zweiten Komponente, wobei die erste Komponente die Rotorblattspitze und die zweite Komponente die Rotorblattwurzel aufweist und die erste und die zweite Komponente separate Teile sind, die gemeinsam das Rotorblatt bilden, wobei die erste Komponente (10) ein erstes Material und die zweite Komponente (20) ein zweites Material aufweist,
wobei die zweite Komponente (20) wenigstens ein erstes und ein zweites Teil (22, 24) aufweist, welche als separate Teile ausgebildet sind und gemeinsam die zweite Komponente (20) bilden,
wobei das erste Teil ein tragendes Teil (22) und das zweite Teil einen Blatthinterkasten (24) darstellt, **dadurch gekennzeichnet, dass**
das erste Teil (22) ein zweites Material und das zweite Teil ein drittes Material aufweist, und dass
faserverstärktes Kunstharz als erstes Material, Stahl als zweites Material für den tragenden Teil (22) der zweiten Komponente (20) und Aluminium als drittes Material für den oder die Teile des Blatthinterkastens (24) vorgesehen sind.

2. Rotorblatt nach Anspruch 1, **gekennzeichnet durch** einen Aufteilung das Blatthinterkasten (24) in mehrere Teile.

3. Rotorblatt nach Anspruch 1 bis 2, **dadurch gekennzeichnet, dass** die Länge der ersten Komponente (10) etwa 5/6 bis 1/2 der Länge des gesamten Rotorblattes entspricht und dass die Länge der zweiten Komponente (20) etwa 1/6 bis 1/2 des gesamten Rotorblattes (1) entspricht.

4. Rotorblatt nach einem der vorstehenden Ansprüche, **dadurch gekennzeichnet, dass** wenigstens der tragende Teil (22) der zweiten Komponente (20) begehbar ausgebildet ist.

5. Rotorblatt nach einem der vorstehenden Ansprüche, **gekennzeichnet durch** eine Verbindung der ersten und zweiten Komponente (10, 20) des Rotorblattes (1) mit einem stumpfen Stoß, wobei die Verbindungselemente zur Überbrückung der Stoßfuge ausschließlich innerhalb des Rotorblattes (1) angeordnet sind.

6. Rotorblatt nach Anspruch 5, **dadurch gekennzeichnet, dass** die Verbindungselemente Querbolzen (12), Zugelemente (14) und einen rotorblatteinwärts gerichteten L-Flansch (26) an der zweiten Komponente (20) aufweisen, wobei die Querbolzen (12) in Ausnehmungen in der ersten Komponente (10) aufgenommen sind, und wobei die Zugelemente (14) mit den Querbolzen (12) verbunden sind, sich bis durch den L-Flansch (26) erstrecken und dort befestigt sind.

7. Rotorblatt nach Anspruch 6, **dadurch gekennzeichnet, dass** die Ausnehmungen in der ersten Komponente (10) zur Aufnahme der Querbolzen (12) als Sacklöcher von der Innenseite der ersten Komponente (10) her ausgebildet sind.

8. Rotorblatt für eine Windenergieanlage nach einem der Ansprüche 1 bis 7, ferner mit
einer ersten Komponente, welche die Rotorblattspitze aufweist,
einer zweiten Komponente, welche die Rotorblattwurzel aufweist,
wobei die erste und die zweite Komponente als separate Teile ausgebildet sind und gemeinsam das Rotorblatt ausbilden,
wobei die zweite Komponente wenigstens ein erstes tragendes Teil (22) und mindestens ein zweites Teil aufweist, welches den Blatthinterkasten (24) darstellt,
wobei das Rotorblatt modular aufgebaut ist und wobei Rotorblattspitzen mit unterschiedlichen Dimensionen an dem tragenden Teil (22) und/oder Blatthinterkästen (24) mit unterschiedlichen Dimensionen an dem tragenden Teil (22) befestigt werden können.

9. Rotorblatt nach Anspruch 8, wobei die Rotorblattspitzen (10) auch bei unterschiedlichen geometrischen Ausgestaltungen eine vorab definierte Kontaktfläche (10a) aufweisen,
wobei die Rotorblatthinterkästen (24) auch bei unterschiedlichen Dimensionen eine vorab definierte Kontaktfläche (24a) aufweisen.

10. Rotorblatt nach Anspruch 7 oder 8,
wobei die Verbindungsfläche (10a) der Rotorblattspitze (10) an eine erste Verbindungsfläche (22a) des tragenden Teils (22) angepasst ist, und
wobei die Kontaktfläche (24a) des Blatthinterkastens (24) an eine zweite Verbindungsfläche (22b) des tragenden Teils (22) angepasst ist.

11. Windenergieanlage mit wenigstens einem Rotorblatt nach einem der vorstehenden Ansprüche.

## Claims

1. A rotor blade for a wind power installation, comprising
at least a first and a second component, wherein the first component has the rotor blade tip and the second component has the rotor blade root, and the first and the second component are separate parts which jointly form the rotor blade, wherein the first component (10) has a first material and the second component (20) has a second material,
wherein the second component (20) has at least a first and a second part (22, 24) which are in the form of separate parts and which jointly form the second component (20),
wherein the first part constitutes a load-bearing part (22) and the second part constitutes a blade trailing edge box (24),
**characterised in that**
the first part (22) has a second material and the second part has a third material, and that
fibre-reinforced synthetic resin is provided as the first material, steel is provided as the second material for the load-bearing part (22) of the second component (20) and aluminium is provided as the third material for the part or parts of the blade trailing edge box (24).

2. A rotor blade according to claim 1, **characterised by** the blade trailing edge box (24) being divided into a plurality of parts.

3. A rotor blade according to claim 1 or claim 2, **characterised in that** the length of the first component (10) corresponds to approximately from 5/6 to 1/2 of the length of the overall rotor blade and the length of the second component (20) corresponds to approximately from 1/6 to 1/2 of the overall rotor blade (1).

4. A rotor blade according to any one of the preceding claims, **characterised in that** at least the load-bearing part (22) of the second component (20) is adapted to be negotiable on foot.

5. A rotor blade according to any one of the preceding claims, **characterised by** a connection of the first and second components (10, 20) of the rotor blade (1) by a butt joint,
wherein the connecting elements for bridging over the joint are arranged exclusively within the rotor blade (1).

6. A rotor blade according to claim 5, **characterised in that** the connection elements have cross-bolts (12), tie elements (14), and an L-flange (26), directed inwardly of the rotor blade, on the second component (20), wherein the cross-bolts (12) are received in openings in the first component (10) and wherein the tie elements (14) are connected to the cross-bolts (12), extend through the L-flange (26) and are secured there.

7. A rotor blade according to claim 6, **characterised in that** the openings in the first component (10) for receiving the cross-bolts (12) are formed as blind holes from the inside of the first component (10).

8. A rotor blade for a wind power installation according to any one of claims 1 to 7, comprising
a first component having the rotor blade tip,
a second component having the rotor blade root,
wherein the first and the second component are in the form of separate parts and jointly form the rotor blade,
wherein the second component has at least a first load-bearing part (22) and at least a second part that constitutes the blade trailing edge box (24),
wherein the rotor blade is of a modular construction and wherein rotor blade tips of differing dimensions can be secured to the load-bearing part (22), and/or blade trailing edge boxes (24) of differing dimensions can be secured to the load-bearing part (22).

9. A rotor blade according to claim 8, wherein the rotor blade tips (10) have a previously defined contact face (10a) even for different geometrical configurations,
wherein the rotor blade trailing edge boxes (24) have a previously defined contact face (24a) even for different dimensions.

10. A rotor blade according to claim 7 or claim 8,
wherein the connecting face (10a) of the rotor blade tip (10) is adapted to a first connecting face (22a) of the load-bearing part (22), and
wherein the contact face (24a) of the blade trailing edge box (24) is adapted to a second connecting face (22b) of the load-bearing part (22).

11. A wind power installation comprising at least one rotor blade according to any one of the preceding claims.

## Revendications

1. Pale de rotor pour une centrale éolienne, comprenant
au moins un premier et un deuxième composant, dans laquelle le premier composant présente la pointe de la pale de rotor et le deuxième composant présente l'emplanture de la pale de rotor et le premier et le deuxième composant sont des pièces séparées constituant ensemble la pale de rotor, dans laquelle le premier composant (10) présente un premier matériau et le deuxième composant (20) présente un deuxième matériau,
dans laquelle le deuxième composant (20) présente au moins une première et une deuxième pièce (22, 24) qui sont réalisées comme des pièces séparées et constituent ensemble le deuxième composant (20),
dans laquelle la première pièce est une pièce portante (22) et la deuxième pièce est un carter arrière de pale (24),
**caractérisée en ce que**
la première pièce (22) présente un deuxième matériau et la deuxième pièce présente un troisième matériau, et **en ce que**
de la résine synthétique renforcée par des fibres est prévue en tant que premier matériau, de l'acier est prévu en tant que deuxième matériau pour la pièce portante (22) du deuxième composant (20) et de l'aluminium est prévu en tant que troisième matériau pour la ou les pièces du carter arrière de pale (24).

2. Pale de rotor selon la revendication 1, **caractérisée en ce que** le carter arrière de pale (24) est divisé en plusieurs pièces.

3. Pale de rotor selon la revendication 1 à 2, **caractérisée en ce que** la longueur du premier composant (10) correspond à environ 5/6 à 1/2 de la longueur de la pale de rotor entière et **en ce que** la longueur du deuxième composant (20) correspond à environ 1/6 à 1/2 de la pale de rotor (1) entière.

4. Pale de rotor selon l'une quelconque des revendications précédentes, **caractérisée en ce qu'**au moins la pièce portante (22) du deuxième composant (20) est réalisée de façon praticable.

5. Pale de rotor selon l'une quelconque des revendications précédentes, **caractérisée par** un raccordement des premier et deuxième composants (10, 20) de la pale de rotor (1) avec un joint bout à bout,
dans laquelle les éléments de raccordement pour couvrir le jeu de joint sont disposés exclusivement à l'intérieur de la pale de rotor (1).

6. Pale de rotor selon la revendication 5, **caractérisée en ce que** les éléments de raccordement présentent des boulons transversaux (12), des éléments de traction (14) et une bride en L (26) dirigée vers l'intérieur de la pale de rotor, au niveau du deuxième composant (20),
dans laquelle les boulons transversaux (12) sont reçus dans des évidements dans le premier composant (10), et dans laquelle les éléments de traction (14) sont raccordés aux boulons transversaux (12), s'étendent jusqu'à travers la bride en L (26) et y sont fixés.

7. Pale de rotor selon la revendication 6, **caractérisée en ce que** les évidements dans le premier composant (10) pour recevoir les boulons transversaux (12) sont réalisés comme des trous borgnes depuis le côté intérieur du premier composant (10).

8. Pale de rotor pour une centrale éolienne selon l'une quelconque des revendications 1 à 7, comprenant en outre
un premier composant présentant la pointe de pale de rotor,
un deuxième composant présentant l'emplanture de pale de rotor,
dans laquelle les premier et deuxième composants sont réalisés comme des pièces séparées et réalisent ensemble la pale de rotor,
dans laquelle le deuxième composant présente au moins une première pièce portante (22) et au moins une deuxième pièce représentant le carter arrière de pale (24),
dans laquelle la pale de rotor est de construction modulaire et dans laquelle les pointes de pale de rotor de différentes dimensions peuvent être fixées à la pièce portante (22) et/ou des carters arrière de pale (24) de différentes dimensions peuvent être fixés à la pièce portante (22).

9. Pale de rotor selon la revendication 8, dans laquelle les pointes de pale de rotor (10) présentent même avec des configurations géométriques différentes une surface de contact prédéfinie,
dans laquelle les carters arrière de pale de rotor (24) présentent même avec des dimensions différentes une surface de contact (24a) prédéfinie.

10. Pale de rotor selon la revendication 7 ou 8,
dans laquelle la surface de raccordement (10a) de la pointe de pale de rotor (10) est adaptée à une première surface de raccordement (22a) de la pièce portante (22), et
dans laquelle la surface de contact (24a) du carter arrière de pale (24) est adaptée à une deuxième surface de raccordement (22b) de la pièce portante (22).

11. Centrale éolienne comprenant au moins une pale de rotor selon l'une quelconque des revendications précédentes.
